# EUROPÄISCHE PATENTSCHRIFT

(11) **EP 1 933 541 B1**
(45) Veröffentlichungstag und Bekanntmachung des Hinweises auf die Patenterteilung: **22.07.2015**
(21) Anmeldenummer: 07123012.2
(22) Anmeldetag: 12.12.2007
(51) Int. Cl.: H04M 1/725, H04N 7/173, H04N 21/414, H04N 21/422, H04N 21/4223, H04N 21/431, H04N 21/475

(54) **Kommunikationseinheit zum Empfang von Informationen**
Communications unit for receiving information
Unité de communication destinée à la réception d'informations

(30) Priorität: 13.12.2006 DE 102006059281
(43) Veröffentlichungstag der Anmeldung: 18.06.2008
(73) Patentinhaber: Vodafone Holding GmbH, 40213 Düsseldorf (DE)
(72) Erfinder: Holzberg, Jan Michael, 40213, Düsseldorf (DE); Weichert, Michael, 40882, Ratingen (DE)
(74) Vertreter: Vogel, Andreas

(56) Entgegenhaltungen:
- EP-A1- 1 475 731
- EP-A2- 1 109 367
- WO-A-03/001772
- WO-A-2004/102960
- WO-A-2005/125029
- DE-A1- 19 707 908
- DE-A1- 19 901 875
- US-A1- 2005 080 863

## Beschreibung

Die Erfindung betrifft eine Kommunikationseinheit zum Empfang von Informationen, mit einem Identifizierungselement und einem Kommunikationselement, wobei das Identifizierungselement einen Angabensatz beinhaltet, der zur Identifizierung der Kommunikationseinheit in einem Kommunikationsnetz dient, die Kommunikationseinheit eine erste charakteristische Adressierung aufweist, mittels des Kommunikationselementes eine Kommunikationsverbindung zwischen dem Kommunikationsnetz und der Kommunikationseinheit aufbaubar ist und die Kommunikationseinheit mit einer Displayeinheit verbindbar ist.

Es ist bekannt, in Mobilfunknetzen eine Textnachricht mittels einer SMS (Short Message Service) oder einer MMS (Multimedia Messaging Service) unter Verwendung eines Mobiltelefons zu übertragen.

Da moderne Mobilfunktelefone nur kleine Bildschirme mit einer geringen Auflösung sowie eine kleine Tastatur aufweisen, ist die Eingabe einer Textnachricht sehr umständlich. Aus diesem Grund nutzen insbesondere ältere Personen die beschriebenen Telekommunikationsdienste nur in sehr geringem Maße.

Aus der DE 197 07 908 A1 ist eine Empfangseinrichtung bekannt, die Informationen empfängt und auf einem Fernseher darstellt. Bei den Informationen handelt es sich um Paging- oder Mailinformationen, die an die Empfangseinrichtung gesandt werden. Mittels der integrierten Elektronik setzt die Empfangseinrichtung die empfangenen Informationen in ein Fernsehersignal um. Somit kann eine Person eine Textnachricht direkt an die Empfangseinrichtung einer weiteren Person senden. Im Anschluss an den Empfang durch die Empfangseinrichtung stellt diese die Textnachricht auf dem Fernseher dar und ermöglicht so die Kenntnisnahme. Als nachteilig hat es sich herausgestellt, dass nur direkt an die Empfangseinrichtung übersandte Informationen von dieser dargestellt werden können.

Ein vergleichbarer Nachteil ergibt sich für ein Kommunikationsmodul aus der DE 199 01 875 A1. In dieser Offenlegungsschrift ist ein Kommunikationsmodul beschrieben, welches ein Fernsehgerät mit einem drahtlosen Kommunikationsnetz verbindet, um Bild- und/oder Tondaten darzustellen. Somit können mit dem Kommunikationsmodul Bilder einer Digitalkamera auf dem Fernsehbildschirm darzustellen werden. Die vom Sendemodul der Digitalkamera abgesendeten Bilddaten werden über das Kommunikationsnetz an das Kommunikationsmodul übertragen.

Auch in der WO 03/011772 A2 und der WO 2004/102960 A1 sind grundsätzlich derartige Systeme dargestellt.

Aufgabe der Erfindung ist es, eine Kommunikationseinheit zu schaffen, welche die vorgenannten Nachteile vermeidet, insbesondere eine größere Sicherheit der Kenntnisnahme einer innerhalb eines Kommunikationsnetzes übertragenen Nachricht gewährleistet.

Die Lösung der Aufgabe wird durch die erfindungsgemäße Kommunikationseinheit gemäß des unabhängigen Anspruches 1 erreicht. In den abhängigen Ansprüchen 2 bis 6 sind bevorzugte Weiterbildungen der Erfindung aufgeführt. Darüber hinaus wird in den Ansprüchen ein Verfahren zum Empfang von Informationen beansprucht.

Erfindungsgemäß ist es vorgesehen, dass die erste charakteristische Adressierung der Kommunikationseinheit mit einer zweiten charakteristischen Adressierung eines Mobiltelefons übereinstimmt, die Kommunikationseinheit eine, an das Mobiltelefon übersandte Information empfängt und die Information über die Displayeinheit visualisierbar ist.

Die Besonderheit der erfindungsgemäßen Kommunikationseinheit liegt folglich darin, dass die Information sowohl an die Kommunikationseinheit als auch an das Mobiltelefon parallel übermittelt wird. Einem Benutzer eröffnet sich einerseits die Möglichkeit, zu Hause oder bei der Arbeit bequem über die Displayeinheit auf die Information zuzugreifen. Davon unabhängig besteht für den Benutzer andererseits die Möglichkeit eines ortsunabhängigen Zugriffes auf die Information mittels des Mobiltelefons.

Unter dem Begriff Kommunikationsnetz ist insbesondere ein Telekommunikationsnetz zu verstehen, das für die Abwicklung von Telefongesprächen konstruiert ist. Ebenfalls kann es sich bei dem Kommunikationsnetz um ein Mobilfunknetz handeln. Bei einem solchen Mobilfunknetz können der Empfänger und prinzipiell auch der Sender mobil eingesetzt werden. Dabei umfasst die Kommunikation in einem Mobilfunknetz sämtliche Kommunikationen zu Wasser, zu Lande und in der Luft. Die Kommunikation reicht vom Privatbereich mit der schnurlosen Telefonie (CT und DECT) und Bluetooth, über alle Mobilfunknetze für die Sprachkommunikation (GSM, UMTS, 4G), den Bündelfunk, Betriebsfunk und Funkruf bis hin zur Satellitenkommunikation.

Mit dem Betriff Mobiltelefon ist ein tragbares, batteriebetriebenes Funktelefon bezeichnet oder auch eine Datenkarte, die in einem Computer integriert werden kann. Kommunikation im Sinne der Erfindung ist insbesondere eine Daten- oder Informationsübertragung. Diese kann auf eine Richtung beschränkt sein oder zwischen zwei Komponenten bidirektional erfolgen.

Unter dem Begriff Information ist im Kontext der Erfindung jeder über das Kommunikationsnetz versendete Inhalt zu verstehen. Dabei können die Inhalte der Informationen in textlicher, grafischer, sprachlicher oder audiovisueller Form vorliegen. Handelt es sich bei dem Kommunikationsnetz um ein Telekommunikationsnetz, werden die Informationen vorrangig Telefongespräche oder Videotelefonie beinhalten. Daneben sind aber auch Bilder, Ring Tones, Wallpapers, Logos, Videos oder Musik an die Kommunikationseinheit bzw. an das Mobiltelefon übertragbar. Ergänzend besteht die Möglichkeit, dass die Information eine SMS (Short Message Service), eine MMS (Multimedia Messaging Service), eine E-Mail, eine EMS (Enhanced Message Service), eine UM (Unified Messaging) und/oder eine LBS (Location Based Services) ist. Darüber hinaus kann es sich um Filme handeln, die entweder über die Displayeinheit oder den Medienspieler des Mobiltelefons gezeigt werden können. Zusätzlich können die Informationen auch Daten aus dem Internet beinhalten, die über die Kommunikationsverbindung an die Kommunikationseinheit weitergeleitet werden.

Bei einer weiteren Ausgestaltung kann die Kommunikationseinheit eine erste Schnittstelle für eine Datentransferanbindung aufweisen, die für eine Datenkommunikation mit dem Mobiltelefon dient. Mittels der Datenkommunikation kann ein Austausch einer Angabe oder der Information zwischen der Kommunikationseinheit und dem Mobiltelefon stattfinden. Insbesondere kann die Angabe dazu dienen, die Kommunikationseinheit und das Mobiltelefon miteinander abzugleichen und etwaige schon gelesene bzw. empfangene Informationen mit einem entsprechenden Indikator zu versehen. Um dieses zu ermöglichen, muss das Mobiltelefon eine für die Datentransferanbindung kompatible erste Verbindungsschnittstelle aufweisen. Dabei haben sich insbesondere drahtlose Schnittstellen als vorteilhaft erwiesen, welche auf dem Bluetooth, IrDA (Infrared Data Association) oder ZigBee Standard basieren. Die Datentransferanbindung zwischen der ersten Schnittstelle und der ersten Verbindungsschnittstelle kann dazu dienen, die Angaben, die in das Mobiltelefon eingegeben werden, an die Kommunikationseinheit zu übertragen, so dass die Kommunikationseinheit dann die Angaben an das Kommunikationsnetz weiterleitet. Während dieser Zeit dient die Displayeinheit zur visuellen Darstellung der über die Tastatur des Mobiltelefons eingegebenen Angaben. Des Weiteren kann die Datentransferanbindung zur Steuerung einer Anzahl von Systemeinstellungen der Kommunikationseinheit dienen. Somit ist es einem Benutzer möglich, etwaige Systemeinstellungen der Kommunikationseinheit seinen persönlichen Vorlieben entsprechend anzupassen.

In einer weiteren Ausführungsform handelt es sich bei der Displayeinheit um einen Fernseher oder einen Computerbildschirm. Zusätzlich kann die Kommunikationseinheit einen Fernsehempfänger aufweisen, bei dem es sich insbesondere um einen digital-, DVBT- (Digital Video Broadcasting - terrestrial) oder analogen Empfänger handelt.

In einer weiteren vorteilhaften Ausführungsform weist die Kommunikationseinheit eine zweite Schnittstelle auf. Diese zweite Schnittstelle kann insbesondere dazu genutzt werden, um ein Mikrofon anzuschließen. In Kombination mit einem Lautsprecher der Displayeinheit ermöglicht es das Mikrofon Telefongespräche über die Kommunikationseinheit durchzuführen. Ein eingehender bzw. ausgehender Telefonruf kann durch ein Symbol auf der Displayeinheit angezeigt und von einem Benutzer angenommen werden. Im Anschluss daran ist der Benutzer nicht etwa gezwungen, das Mikrofon des Mobiltelefons zu benutzen, sondern kann über das an die Kommunikationseinheit angeschlossene Mikrofon mit dem Anrufer kommunizieren. Zusätzlich kann die Kommunikationseinheit einen Datenspeicher aufweisen, in dem Telefonnummern und Adressen gespeichert sind. Der Datenspeicher erlaubt es dem Benutzer der Kommunikationseinheit leicht eine Telefonnummer einer Person auszuwählen und einen entsprechenden Telefonanruf auszulösen. Des Weiteren kann an die zweite Schnittstelle neben dem Mikrofon auch eine Kamera angeschlossen werden. Durch die Kombination der Kamera und des Mikrofons lässt sich eine Videotelefonie über die Kommunikationseinheit abhalten. Bei einer Videotelefonie kommunizieren zwei miteinander kompatible Bildtelefongeräte, um einen gegenseitigen Sicht- und Sprachkontakt der Gesprächspartner herzustellen. Durch die erfindungsgemäße Darstellung der Bildinformation auf der Displayeinheit ist ein angenehmes und komfortables kommunizieren möglich. Zusätzlich kann ein Benutzer weiterhin auch sein Mobiltelefon benutzen, um ortsunabhängig eine Videotelefonie abzuhalten.

Die erste und zweite charakteristische Adressierung sollen eine eindeutige Zuordnung der Kommunikationseinheit bzw. des Mobiltelefons innerhalb des Kommunikationsnetzes ermöglichen. Dazu kann es sich bei der ersten und der zweiten charakteristischen Adressierung um eine Rufnummer (MSISDN) handeln, welche ein Anrufer wählt, um das Mobiltelefon zu erreichen. Der für die Identifizierung der Kommunikationseinheit in dem Kommunikationsnetz dienende Angabensatz kann eine eindeutige, gerätespezifische, elektronische Identifizierungsnummer aufweisen. Diese Nummer (IMEI) besteht aus einem Typencode und einer fortlaufenden, herstellerunabhängigen Fertigungsnummer. Des Weiteren kann ein Teil des Angabensatz eine internationale Mobilfunkteilnehmerkennung (IMSI) beinhalten. Es handelt sich dabei um eine netzinterne Kennung, die auf der SIM-Karte vermerkt ist und einer Identifizierung des Teilnehmers bei der Vermittlung und Signalisierung eines Anrufes dient. Durch die Kombination einer oder mehrerer der vorgenannten Nummern als Angabensatz ist es dem Kommunikationsnetz möglich, die Kommunikationseinheit und das Mobiltelefon eindeutig zu identifizieren.

Eine weitere vorteilhafte Ausgestaltungsform der Kommunikationseinheit zeichnet sich dadurch aus, dass die Kommunikationseinheit in der Displayeinheit integriert ist. Durch diese Integration ist die Verwendung und der Anschluss der Kommunikationseinheit wesentlich erleichtert, so dass insbesondere ältere Personen von der erfindungsgemäßen Kommunikationseinheit leichter Gebrauch machen können.

Die Erfindung betrifft ebenfalls ein Verfahren zum Empfang von Informationen mit einer Kommunikationseinheit, wobei die Kommunikationseinheit ein Identifizierungselement und ein Kommunikationselement aufweist, das Identifizierungselement einen Angabensatz beinhaltet, der zur Identifizierung der Kommunikationseinheit in einem Kommunikationsnetz dient, die Kommunikationseinheit eine erste charakteristische Adressierung aufweist, mittels des Kommunikationselementes eine Kommunikationsverbindung zwischen dem Kommunikationsnetz und der Kommunikationseinheit aufgebaut wird, die Kommunikationseinheit mit einer Displayeinheit verbunden wird. Zur Lösung der Aufgabe ist erfindungsgemäß vorgesehen, dass die erste charakteristische Adressierung der Kommunikationseinheit mit einer zweiten charakteristischen Adressierung eines Mobiltelefons übereinstimmt, die Kommunikationseinheit eine, an das Mobiltelefon übersandte Information empfängt, und die Information über die Displayeinheit visualisiert wird.

In einer vorteilhaften Ausgestaltung handelt es sich bei der Information um eine SMS, also eine Kurznachricht, welche über einen Punkt-zu-Punkt-Kurznachrichtendienst übertragen wird, der im Rahmen der GSM-Protokollarchitektur auf der Signalisierungsebene realisiert ist. Dieser Dienst umfasst den Transport paketorientierter Nutzdaten von und zu Mobiltelefonen. Die Kurznachrichten werden dabei über ein Short-Message-Dienstzentrum (Short Message Service Center, SM SC) im Store-and-Forward-Betrieb transportiert. Das Dienstzentrum nimmt die maximal 160 Zeichen lange Kurznachricht entgegen und leitet diese gemäß dem erfindungsgemäßen Verfahren sowohl an das Mobiltelefon als auch die Kommunikationseinheit weiter. Im Anschluss kann ein Benutzer die Information sowohl auf seinem Mobiltelefon als auch auf der Displayeinheit abrufen. Um sicherzustellen, dass nach einem ersten Abrufen der Information, diese sowohl auf dem Mobiltelefon als auch auf der Kommunikationseinheit als gelesen eingestuft bzw. gelöscht wird, kann mittels der Datentransferanbindung ein Abgleich zwischen den beiden genannten Geräten stattfinden.

Eine weitere vorteilhafte Ausgestaltung des erfindungsgemäßen Verfahrens zeichnet sich dadurch aus, dass die Kommunikationseinheit und das Mobiltelefon eine Signalisierungsnachricht empfangen und die Signalisierungsnachricht auf eine in dem Kommunikationsnetz hinterlegte Information hinweist, wobei insbesondere durch eine Bestätigung an der Kommunikationseinheit und/oder dem Mobiltelefon die Information von der Kommunikationseinheit und/oder dem Mobiltelefon empfangen wird. In dieser Ausführungsvariante dient die Signalisierungsnachricht als eine Art Hinweisgeber, was sich besonders vorteilhaft für die Telekommunikation bzw. die Videotelefonie erwiesen hat. Erfindungsgemäß wird die Signalisierungsnachricht sowohl von der Kommunikationseinheit als auch von dem Mobiltelefon empfangen und entsprechend dargestellt, wie beispielsweise mittels eines auf der Displayeinheit angezeigten Symbols. Im Anschluss besteht für den Benutzer die Möglichkeit die Information entweder auf dem Mobiltelefon oder mittels der Kommunikationseinheit abzurufen. Dazu kann es der Betätigung einer Taste auf dem Mobiltelefon oder einer Fernsteuerungseinheit der Displayeinheit bedürfen. Denkbar ist auch, dass nach Ablauf einer vordefinierten Zeitspanne die Information automatisch von der Kommunikationseinheit abgerufen wird. Handelt es sich beispielsweise um einen Telefonanruf, würde dieser durchgestellt und über den Lautsprecher der Displayeinheit an den Benutzer übertragen. Dieser könnte das angeschlossene Mikrofon nutzen, um auf den Anruf zu antworten. Weiterhin ist es vorteilhaft, wenn die Signalisierungsnachricht nicht nur einen Hinweis auf die Verfügbarkeit einer Information enthält, sondern auch weitere Daten, wie etwa den Absender der Information oder den Typ der Information. Enthält die Signalisierungsnachricht die charakteristische Adressierung des anrufenden Teilnehmers, lässt sich auf der Displayeinheit dessen Name darstellen.

Eine weitere vorteilhafte Variante des Verfahrens zeichnet sich dadurch aus, dass über das Mobiltelefon oder eine Fernsteuerungseinheit eine Botschaft in die Kommunikationseinheit eingegeben und auf der Displayeinheit angezeigt wird, wobei die Botschaft anschließend über die Kommunikationsverbindung an das Kommunikationsnetz übertragen wird. Im Rahmen des beschriebenen Verfahrens soll der Begriff Botschaft für all jene Daten stehen, die von einem Benutzer in die Kommunikationseinheit eingebbar sind, insbesondere um E-Mails, SMS, MMS oder sonstige Textbotschaften. Dabei kann ein Benutzer einerseits die Tastatur des Mobiltelefons nutzen, um diese Botschaft einzugeben. Vorteilhafterweise wird nach einer Betätigung einer Taste, das dieser Taste hinterlegte Informationselement über die Datentransferanbindung an die Kommunikationseinheit übertragen und von dieser auf der Displayeinheit dargestellt. Somit bedient sich ein Benutzer zwar der Tastatur des Mobiltelefons, ist aber nicht auf dessen kleinen Bildschirm angewiesen. Vielmehr wird die eingegebene Botschaft auf der Displayeinheit angezeigt. Darüber hinaus ist es auch denkbar, dass die Botschaft mittels einer Fernsteuerungseinheit, wie etwa einer TV-Fernbedienung oder einem Keyboard, direkt an die Kommunikationseinheit übertragen wird. Vorzugsweise ist das Keyboard über eine Infrarotschnittstelle mit der Displayeinheit und/oder der Kommunikationseinheit verbunden. So ist es neben der Eingabe von Botschaften zur Beantwortung der Information auch möglich, einen auf der Kommunikationseinheit hinterlegten Kalender zu pflegen und weitere Daten einzugeben.

Eine weitere vorteilhafte Ausführungsvariante des erfindungsgemäßen Verfahrens ergibt sich dadurch, dass das Kommunikationsnetz eine Position des Mobiltelefons bestimmt, wobei insbesondere in dem Fall, dass die Position mit einem vordefinierten Gebiet übereinstimmt, die Information vom Kommunikationsnetz ausschließlich an die Kommunikationseinheit übersandt wird. Da Mobilfunknetze eine wabenartige Struktur aufweisen, ist es den Betreibern dieser Art von Kommunikationsnetzen möglich, die Position des sendenden bzw. empfangenden Mobiltelefons zu bestimmen. Ergibt sich nun, dass das Mobiltelefon und die Kommunikationseinheit in einer Wabe des Mobilfunknetzes eingebucht sind, kann die Information nur an die Kommunikationseinheit übermittelt werden. Dieses bietet sich insbesondere in den Fällen an, in denen die Kommunikationseinheit an der Arbeitsstelle oder dem Wohnort genutzt wird. Erkennt das Kommunikationsnetzwerk hingegen, dass das Mobiltelefon in einer anderen Wabe eingebucht ist als die Kommunikationseinheit, wird die Information sowohl an die Kommunikationseinheit als auch an das Mobiltelefon übersandt.

Eine weitere Ausführungsform des erfindungsgemäßen Verfahrens zeichnet dadurch aus, dass die Information von der Kommunikationseinheit in eine laufende Illustration, wie etwa ein Fernsehprogramm, auf der Displayeinheit eingeblendet wird, wobei insbesondere die Displayeinheit mittels der Fernsteuerungseinheit in einen Informationsmodus zur Darstellung der Information gebracht wird. Im Rahmen dieses Informationsmodus stellt die Displayeinheit jene Daten dar, die für einen Benutzer entscheidungsrelevant sind, ob er die Information annehmen möchte oder nicht. Weiterhin können dabei Daten aus dem Datenspeicher der Kommunikationseinheit, wie etwa Telefonnummern, Namen oder Bilder berücksichtigt und ebenfalls auf der Displayeinheit dargestellt werden. Zusätzlich dient der Informationsmodus auch der Eingabe von Botschaften. Möchte folglich ein Benutzer eine SMS oder E-Mail schreiben, schaltet er dazu die Displayeinheit in den Informationsmodus und erhält ein Textfeld, in dem die eingegebenen Botschaften darstellbar sind. Handelt es sich bei der Information um eine Videotelefonie, dient der Informationsmodus dazu das Bild des anrufenden Teilnehmers anzuzeigen. Entsprechende Videosoftware kann auf der Kommunikationseinheit hinterlegt sein.

Die erfindungsgemäße Aufgabe wird weiterhin gelöst durch ein System mit einer Kommunikationseinheit und einer Displayeinheit, wobei das System nach einem der oben beschriebenen Verfahren betreibbar ist. Dabei gelten selbstverständlich alle Merkmale und Details, die im Zusammenhang mit dem erfindungsgemäßen Verfahren bzw. der erfindungsgemäßen Kommunikationseinheit beschrieben sind auch im Zusammenhang mit dem erfindungsgemäßen System und jeweils umgekehrt.

Weitere Maßnahmen, Vorteile, Merkmale und Effekte der Erfindung ergeben sich aus den Unteransprüchen, der nachfolgenden Beschreibung sowie den Zeichnungen. In den Zeichnungen ist die Erfindung in mehreren Ausführungsbeispielen schematisch dargestellt. Es zeigen:
- Fig. 1: eine erfindungsgemäße Kommunikationseinheit, ein Mobiltelefon und eine Displayeinheit,
- Fig. 2: die Absendung einer Information von einem weiteren Mobiltelefon an die Kommunikationseinheit und
- Fig. 3: ein weiteres Ausführungsbeispiel der erfindungsgemäßen Kommunikationseinheit.

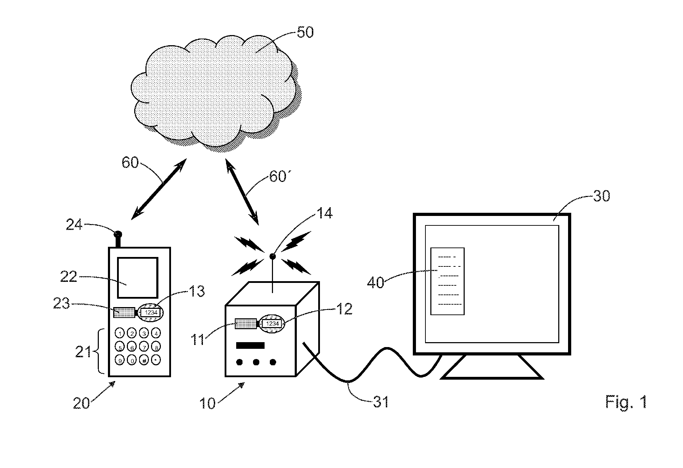

In Fig. 1 ist ein Mobiltelefon 20 dargestellt. Das Mobiltelefon 20 weist ein als Tastatur ausgestaltetes Eingabemittel 21 auf. Über dieses Eingabemittel 21 kann ein Benutzer Daten in den nicht dargestellten Speicher des Mobiltelefons 20 eingeben, wobei die Daten auf einem Anzeigemittel 22 dargestellt werden. In dem Mobiltelefon 20 ist weiterhin ein Mittel zur Identifizierung 23 integriert. Dieses Mittel zur Identifizierung 23 weist einen nicht dargestellten Prozessor und eine Speichereinheit auf, in der ein Angabensatz gespeichert ist. Mittels dieses Angabensatzes ist es einem Kommunikationsnetz 50 möglich, die Identität des Mobiltelefons 20 als auch jene seines Benutzers eindeutig nachzuweisen. Um mit dem Kommunikationsnetz 50 zu kommunizieren, weist das Mobiltelefon 20 ein Kommunikationsmittel 24 auf. Bei diesem Kommunikationsmittel 24 handelt es sich um eine in konstruktiver Baueinheit ausgeführte Kombination aus Sender und Empfänger.

Des Weiteren ist in Fig. 1 eine erfindungsgemäße Kommunikationseinheit 10 dargestellt. Die Kommunikationseinheit 10 weist ein Identifizierungselement 11 und ein Kommunikationselement 14 auf. Das Identifizierungselement 11 beinhaltet einen Angabensatz, der zur Identifizierung der Kommunikationseinheit 10 in dem Kommunikationsnetz 50 dient. Die Ausgestaltung des Angabensatzes ist dabei identisch mit der des Angabensatzes, der in dem Mobiltelefon 20 integriert ist. Das Kommunikationselement 14 ist in seinem Aufbau und seiner Funktion identisch mit dem Kommunikationsmittel 24 des Mobiltelefons 20. Es handelt sich ebenfalls um eine Kombination aus einem Sender und Empfänger, welche für den Aufbau einer Kommunikationsverbindung 60' genutzt wird. Je nachdem, was als Übertragungsmedium eingesetzt wird, handelt es sich bei den von dem Kommunikationselement 14 empfangenen bzw. gesendeten Signalen um elektrische Impulse, Licht oder elektromagnetische Wellen. Über die Kommunikationsverbindung 60, 60' ist ein ein- oder wechselseitiger Austausch von Sprache, Text, Grafiken oder Daten zwischen dem Kommunikationsnetz 50 und der Kommunikationseinheit 10 bzw. dem Mobiltelefon 20 möglich.

Über ein Anschlusselement 31 ist die Kommunikationseinheit 10 mit einer Displayeinheit 30 verbunden. Bei der Displayeinheit 30 kann es sich um einen Fernsehbildschirm oder um einen Computerbildschirm handeln. In einem nicht dargestellten Speicher der Kommunikationseinheit 10 ist ein Computerprogramm hinterlegt, welches selbständig den Typ und die Art der angeschlossenen Displayeinheit 30 ermittelt.

Erfindungsgemäß ist es vorgesehen, dass die Kommunikationseinheit 10 eine erste charakteristische Adressierung 12 aufweist. Bei dieser charakteristischen Adressierung 12 handelt es sich vorzugsweise um eine wählbare Rufnummer. Darüber hinaus soll die als erste charakteristische Adressierung 12 verwendete Rufnummer (Mobile Subscriber Integrated Services Digital Networknumber, MSISDN) mit einer zweiten charakteristischen Adressierung 13 des Mobiltelefons 20 übereinstimmen.

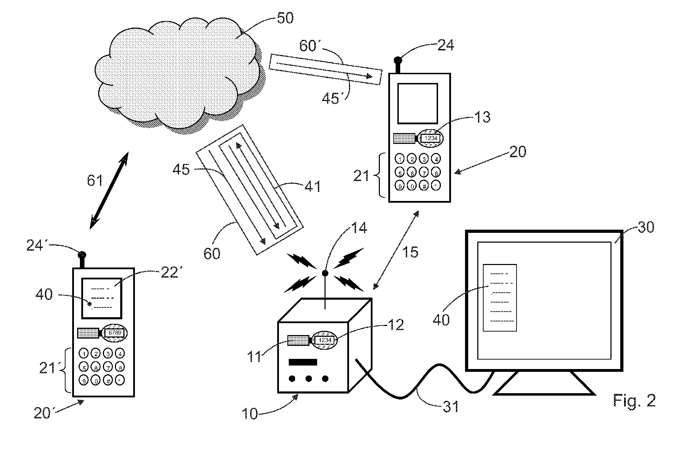

In der Fig. 2 ist ein weiteres Mobiltelefon 20' dargestellt, auf dessen Anzeigemittel 22' eine Information 40 dargestellt ist, welche vorzugsweise über das Eingabemittel 21' gegeben wurde. Bei der Information 40 handelt es sich um eine Textnachricht, wie etwa eine SMS, eine MMS, eine E-Mail und/oder eine EMS. Mittels einer durch das Kommunikationsmittel 24' aufgebauten zweiten Kommunikationsverbindung 61 kann diese Information 40 an das Kommunikationsnetz 50 übertragen werden. Von dort aus wird die Information 40 über ein Dienstzentrum an den Empfänger weitergeleitet. Dazu beinhaltet die Information 40 die zweite charakteristische Adressierung 13 des Mobiltelefons 20. Wie schon dargelegt, ist es erfindungsgemäß vorgesehen, dass die zweite charakteristische Adressierung 13 des Mobiltelefons 20 mit der ersten charakteristischen Adressierung 12 der Kommunikationseinheit 10 übereinstimmt. Folglich empfangen sowohl die Kommunikationseinheit 10 als auch das Mobiltelefon 20 die übersandte Information 40. Im Anschluss daran visualisiert die Kommunikationseinheit 10 die Information 40 auf der Displayeinheit 30. Somit kann die empfangene Information 40 sowohl auf dem Anzeigemittel 22 des Mobiltelefons 20 als auch auf der Displayeinheit 30 angezeigt werden.

Handelt es sich bei der empfangenen Information 40 nicht um eine Textnachricht, die automatisch sowohl an die Kommunikationseinheit 10 als auch an das Mobiltelefon 20 übertragen wird, hat sich als vorteilhaft erwiesen, wenn vom Kommunikationsnetz 50 zuerst eine Signalisierungsnachricht 45, 45' übermittelt wird. Nachdem das Kommunikationsnetz 50 die Information 40 - wie etwa ein Telefonanruf - empfangen hat, übersendet es eine Signalisierungsnachricht 45, 45' über die Kommunikationsverbindungen 60,60' sowohl an die Kommunikationseinheit 10 als auch an das Mobiltelefon 20. Durch diese Signalisierungsnachricht 45,45' erhält ein Benutzer einen Hinweis auf die bereitliegende Information 40. Dadurch ist es dem Benutzer möglich auszuwählen, ob er die Information 40 auf der Displayeinheit 30 oder auf dem Mobiltelefon 20 angezeigt bekommen möchte. Eine Informationsübertragung 41 erfolgt nach einer Betätigung einer Taste auf dem Mobiltelefon 20 und/oder einer Fernsteuerungseinheit. Hierbei bedeutet die Betätigung einer Taste des Eingabemittels 21 nicht automatisch die Annahme der Information 40 auf dem Mobiltelefon 20. Vielmehr kann die Betätigung der Taste auch dazu führen, dass das Mobiltelefon 20 über eine Datentransferanbindung 15 einen Abruf der Information 40 mittels der Kommunikationseinheit 10 auslöst. Gleichfalls kann eine Fernsteuerungseinheit, wie etwa eine Fernbedienung, derart programmiert sein, dass eine Betätigung das Übertragen der Information 40 auf die Kommunikationseinheit 10 auslöst. Im Anschluss daran wird die heruntergeladene Information 40 auf der Displayeinheit 30 dargestellt. Dazu kann die Displayeinheit 30 in einen Informationsmodus übergehen, um beispielsweise ein laufendes Fernsehprogramm zu überblenden bzw. den Ton auszustellen.

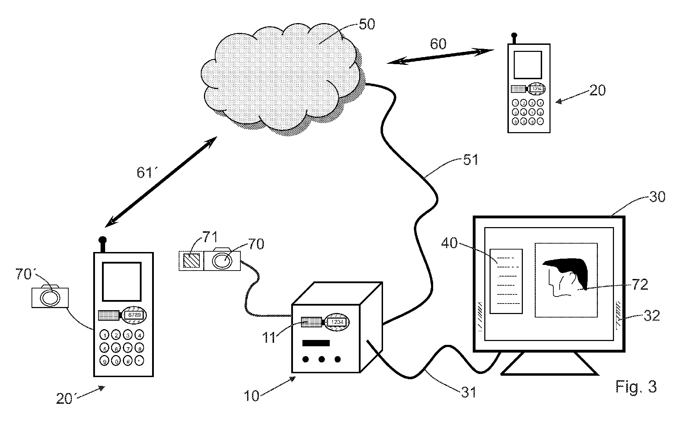

Die Fig. 3 zeigt ein weiteres vorteilhaftes Ausführungsbeispiel der erfindungsgemäßen Kommunikationseinheit 10. Im Gegensatz zu den vorher gezeigten Ausführungsbeispielen ist die Kommunikationseinheit 10 nicht mehr über ein funkbasiertes Kommunikationselement 14 mit dem Kommunikationsnetz 50 verbunden. Vielmehr ist diese Verbindung über einen Kabelanschluss 51, wie etwa eine DSL-Leitung (Digital Subscriber Line) realisiert. Diese Verbindungsart hat den Vorteil, dass der kabelgebundene Anschluss 51 eine höhere Datenübertragungsrate aufweist, als die funkbasierte Kommunikationsverbindung 60. Folglich bietet sich diese Art der Verbindung der Kommunikationseinheit 10 mit dem Kommunikationsnetz 50 für Videotelefonie an. Dazu kann eine Kamera 70' mit einem fremden Mobiltelefon 20' verbunden sein. Ein Anrufer kann dann über die zweite Kommunikationsverbindung 61 sowohl Ton- als auch Bildinformationen 40 an das Kommunikationsnetzwerk 50 übersenden. Diese Ton- und Bildinformationen 40 können dann wahlweise auf dem Mobiltelefon 20 oder der Displayeinheit 30 dargestellt werden. Entscheidet sich der Benutzer für eine Annahme der Videotelefonie über die Kommunikationseinheit 10 so erscheint im Informationsmodus auf der Displayeinheit 30 das Bild des Videotelefonierenden 72. Die Toninformationen können über einen Lautsprecher 32 der Displayeinheit 30 übertragen werden. Zusätzlich zeigt die Kommunikationseinheit 10 neben dem Bild 72 noch weitere Informationen 40 über den Anrufenden an. Zur Beantwortung des Videotelefonieanrufes ist an die Kommunikationseinheit 10 über eine zweite Schnittstelle eine Kamera 70 und ein Mikrofon 71 anschließbar. Der Benutzer der erfindungsgemäßen Kommunikationseinheit 10 kann also beispielsweise an seinem Arbeitsplatz in das Mikrofon 71 sprechen und in die Kamera 70 schauen. Die dabei generierten Ton- und Bildinformationen 40 werden über den Kabelanschluss 51 zurück an das fremde Mobiltelefon 20' übertragen.

### Bezugszeichenliste

- 10: Kommunikationseinheit
- 11: Identifizierungselement
- 12: erste charakteristische Adressierung
- 13: zweite charakteristische Adressierung
- 14: Kommunikationselement
- 15: Datentransferanbindung

- 20,20': Mobiltelefon
- 21,21': Eingabemittel
- 22,22': Anzeigemittel
- 23: Mittel zur Identifizierung
- 24,24': Kommunikationsmittel

- 30: Displayeinheit
- 31: Anschlusselement
- 32: Lautsprecher

- 40: Information
- 41: Informationsübertragung
- 45,45': Signalisierungsnachricht

- 50: Kommunikationsnetz
- 51: Kabelanschluss

- 60,60': Kommunikationsverbindung
- 61: zweite Kommunikationsverbindung

- 70,70': Kamera
- 71: Mikrofon
- 72: Bild eines Videotelefonats

## Patentansprüche

1. System mit einem Mobiltelefon (20, 20') und einer Kommunikationseinheit (10) zum Empfang und Visualisierung von Informationen (40) auf einer Displayeinheit in Form eines Fernsehers oder eines Computerbildschirms,
mit einem Identifizierungselement (11) und einem Kommunikationselement (14), wobei
das Identifizierungselement (11) einen Angabensatz beinhaltet, der zur Identifizierung der Kommunikationseinheit (10) in einem Kommunikationsnetz (50) dient,
die Kommunikationseinheit (10) eine erste charakteristische Adressierung (12) aufweist,
mittels des Kommunikationselementes (14) eine Kommunikationsverbindung (60,60') zwischen dem Kommunikationsnetz (50) und der Kommunikationseinheit (10) aufbaubar ist,
die Kommunikationseinheit (10) mit einer Displayeinheit (30) in Form des Fernsehers oder des Computerbildschirms verbindbar ist, **dadurch gekennzeichnet, dass**
die erste charakteristische Adressierung (12) der Kommunikationseinheit (10) mit einer zweiten charakteristischen Adressierung (13) des Mobiltelefons (20,20') übereinstimmt und die Kommunikationseinheit (10) eine an das Mobiltelefon (20, 20') übersandte Information (40) empfängt, und
folglich eine an das Mobiltelefon (20, 20') übersandte Information (40) sowohl an die Kommunikationseinheit (10) als auch an das Mobiltelefon (20, 20') parallel übermittelt wird, und
die Information (40) über die Displayeinheit (30) in Form des Fernsehers oder des Computerbildschirms visualisierbar ist,
wobei die Kommunikationseinheit (10) eine erste Schnittstelle für eine Datentransferanbindung (15) aufweist, die für eine Datenkommunikation mit dem Mobiltelefon (20,20') dient,
wobei mittels der Datenkommunikation ein Austausch einer Angabe oder der Information zwischen der Kommunikationseinheit (10) und dem Mobiltelefon (20, 20') zum Abgleich stattfindet und etwaige schon gelesene bzw. empfangene Informationen (40) mit einem entsprechenden Indikator versehen werden.

2. System (10) nach Anspruch 1,
**dadurch gekennzeichnet,**
**dass** die Kommunikationseinheit (10) eine zweite Schnittstelle und einen Datenspeicher aufweist, wobei an die zweite Schnittstelle eine Kamera (70,70') und/oder ein Mikrofon (71) anschließbar sind.

3. System (10) nach Anspruch 1 oder 2,
**dadurch gekennzeichnet,**
**dass** das Kommunikationsnetz (50) ein Telekommunikationsnetz, insbesondere ein Mobilfunknetz ist, wobei insbesondere die erste und die zweite charakteristische Adressierung (12,13) eine Telefonnummer (MSISDN) sind.

4. System (10) nach einem der vorhergehenden Ansprüche,
**dadurch gekennzeichnet,**
**dass** die Information (40) eine Textnachricht eines Telekommunikationsdienstes ist, insbesondere eine SMS (Short Message Service), eine MMS (Multimedia Messaging Service), eine E-Mail, eine EMS (Enhanced Message Service), eine UM (Unified Messaging) und/oder eine LBS (Location Based Services) ist.

5. System (10) nach einem der vorhergehenden Ansprüche,
**dadurch gekennzeichnet,**
**dass** die Kommunikationseinheit (10) in der Displayeinheit (30) in Form des Fernsehers oder des Computerbildschirms integriert ist.

6. Verfahren zum Empfang von Informationen (40),
mit einer Kommunikationseinheit (10) und einem Mobiltelefon, wobei
die Kommunikationseinheit (10) ein Identifizierungselement (11) und ein Kommunikationselement (14) aufweist,
das Identifizierungselement (11) einen Angabensatz beinhaltet, der zur Identifizierung der Kommunikationseinheit (10) in einem Kommunikationsnetz (50) dient,
die Kommunikationseinheit (10) eine erste charakteristische Adressierung (12) aufweist,
mittels des Kommunikationselementes (14) eine Kommunikationsverbindung (60,60') zwischen dem Kommunikationsnetz (50) und der Kommunikationseinheit (10) aufgebaut wird,
die Kommunikationseinheit (10) mit einer Displayeinheit (30) in Form eines Fernsehers oder eines Computerbildschirms verbunden wird, **dadurch gekennzeichnet, dass**
die erste charakteristische Adressierung (12) der Kommunikationseinheit (10) mit einer zweiten charakteristischen Adressierung (13) eines Mobiltelefons (20,20') übereinstimmt und die Kommunikationseinheit (10) eine an das Mobiltelefon (20, 20') übersandte Information (40) empfängt, wobei
folglich eine an das Mobiltelefon (20, 20') übersandte Information (40) sowohl an die Kommunikationseinheit (10) als auch an das Mobiltelefon (20, 20') parallel übermittelt wird,
wobei die Kommunikationseinheit (10) eine erste Schnittstelle für eine Datentransferanbindung (15) aufweist, die für eine Datenkommunikation mit dem Mobiltelefon (20, 20') dient,
wobei mittels der Datenkommunikation ein Austausch einer Angabe oder der Information zwischen der Kommunikationseinheit (10) und dem Mobiltelefon (20, 20') zum Abgleich stattfindet und etwaige schon gelesene bzw. empfangene Informationen (40) mit einem entsprechenden Indikator versehen werden und die Information (40) über die Displayeinheit (30) in Form des Fernsehers oder des Computerbildschirms visualisiert wird.

7. Verfahren nach Anspruch 6,
**dadurch gekennzeichnet,**
**dass** die Kommunikationseinheit (10) und das Mobiltelefon (20,20') eine Signalisierungsnachricht (45,45') empfangen und die Signalisierungsnachricht (45,45') auf eine in dem Kommunikationsnetz (50) hinterlegte Information (40) hinweist, wobei insbesondere durch eine Bestätigung an der Kommunikationseinheit (10) und/oder dem Mobiltelefon (20,20') die Information (40) von der Kommunikationseinheit (10) und/oder dem Mobiltelefon (20,20') empfangen wird.

8. Verfahren nach Anspruch 6 oder 7,
**dadurch gekennzeichnet,**
**dass** über das Mobiltelefon (20,20') oder eine Fernsteuerungseinheit eine Botschaft in die Kommunikationseinheit (10) eingegeben und auf der Displayeinheit (30) in Form des Fernsehers oder des Computerbildschirms angezeigt wird, wobei die Botschaft über die Kommunikationsverbindung (60,60') an das Kommunikationsnetz (50) übertragen wird.

9. Verfahren nach einem der Ansprüche 7 oder 8,
**dadurch gekennzeichnet,**
**dass** das Kommunikationsnetz (50) eine Position des Mobiltelefons (20,20') bestimmt, wobei insbesondere in dem Fall, dass die Position mit einem vordefinierten Gebiet übereinstimmt, die Information (40) vom Kommunikationsnetz (50) ausschließlich an die Kommunikationseinheit (10) übersandt wird.

10. Verfahren nach einem der Ansprüche 7 oder 9,
**dadurch gekennzeichnet,**
**dass** die Information (40) von der Kommunikationseinheit (10) in eine laufende Illustration auf der Displayeinheit (30) eingeblendet wird, wobei insbesondere die Displayeinheit (30) in Form des Fernsehers oder des Computerbildschirms mittels der Fernsteuerungseinheit in einen Informationsmodus zur Darstellung der Information (40) gebracht wird.

## Claims

1. System with a mobile telephone (20, 20') and a communication unit (10) for receiving and displaying information (40) on a display unit in the form of a television screen or a computer monitor,
having an identification element (11) and a communication element (14), wherein
the identification element (11) includes a data set that serves to identify the communication unit (10) in a communication network (50),
the communication unit (10) has a first characteristic addressing (12),
a communication link (60, 60') can be established between the communication network (50) and the communication unit (10) via the communication element (14),
the communication unit (10) is connectable to a display unit (30) in the form of the television screen or the computer monitor, wherein
the first characteristic addressing (12) of the communication unit (10) matches a second characteristic addressing (13) of the mobile telephone (20, 20'), and the communication unit (10), receives information (40) sent to the mobile telephone (20, 20'), and
consequently, the information (40) sent to the mobile telephone (20, 20') is also transferred to the communication unit (10) and the mobile telephone (20, 20') in parallel, and
the information (40) can be displayed via the display unit (30) in the form of the television screen or the computer monitor,
wherein the communication unit (10) comprises a first interface for data transfer connection (15), which is used for communicating data with the mobile telephone (20, 20'),
wherein an exchange of intelligence or the information takes place between the communication unit (10) and the mobile telephone (20, 20') via data communication for the purpose of comparison, and any information (40) that has been read or received previously is furnished with a corresponding indicator.

2. Communication unit (10) according to claim 1, **characterized in that**
the communication unit (10) has a second interface and a data memory, wherein a camera (70, 70') and/or a microphone (71) can be connected to the second interface.

3. Communication unit (10) according to either of claims 1 or 2,
**characterized in that**
the communication network (50) is a telecommunication network, particularly a mobile phone network, wherein the first and the second characteristic addressings (12, 13) are both telephone numbers (MSISDN).

4. Communication unit (10) according to any one of the preceding claims,
**characterized in that**
the information (40) is a text message from a telecommunication service, in particular a Short Message Service (SMS), a Multimedia Messaging Service (MMS), an email, an Enhanced Message Service (EMS), a Unified Messaging (UM) and/or a Location Based Services (LBS).

5. Communication unit (10) according to one of the preceding claims,
**characterized in that**
the communication unit (10) is integrated in the display unit (30) in the form of a television screen or a computer monitor.

6. System for receiving information (40),
with a communication unit (10) and a mobile telephone, wherein
the communication unit (10) has an identification element (11) and a communication element (14),
the identification element (11) includes a data set that serves to identify the communication unit (10) in a communication network (50),
the communication unit (10) has a first characteristic addressing (12),
a communication link (60, 60') is established between the communication network (50) and the communication unit (10) via the communication element (14),
the communication unit (10) is connected to a display unit (30) in the form of a television screen or a computer monitor, **characterised in that**
the first characteristic addressing (12) of the communication unit (10) matches a second characteristic addressing (13) of a mobile telephone (20, 20'), and the communication unit (10), receives an item of information (40) sent to the mobile telephone (20, 20'), wherein
consequently, the information (40) sent to the mobile telephone (20, 20') is also transferred to the communication unit (10) and the mobile telephone (20, 20') in parallel,
the communication unit (10) comprises a first interface for data transfer connection (15), which is used for communicating data with the mobile telephone (20, 20'),
wherein an exchange of intelligence or the information takes place between the communication unit (10) and the mobile telephone (20, 20') via data communication for the purpose of comparison, and any information (40) that has been read or received previously is furnished with a corresponding indicator, and wherein the information (40) is displayed via the display unit (30) in the form of the television screen or the computer monitor.

7. Method according to claim 6,
**characterized in that**
the communication unit (10) and the mobile telephone (20, 20') receive a signalling message (45, 45'), and the signalling message (45, 45') refers to an item of information (40) stored in the communication network (50), wherein in particular the information (40) is received by the communication unit (10) and/or the mobile telephone (20, 20') by means of confirmation on the communication unit (10) and/or the mobile telephone (20, 20').

8. A method according to either of claims 6 or 7, **characterized in that**
a message is input in the communication unit (10) via the mobile telephone (20, 20') or a remote control unit and is displayed on the display unit (30) in the form of the television screen or the computer monitor, wherein the message is transmitted to the communication network (50) via the communication link (60, 60').

9. Method according to either of claims 7 or 8, **characterized in that**
the communication network (50) determines a position of the mobile telephone (20, 20'), wherein the information (40) is sent from the communication network (50) exclusively to the communication unit (10) particularly if the position is consistent with a predefined area.

10. Method according to either of claims 7 or 9, **characterized in that**
the information (40) from the communication unit (10) is shown in an ongoing illustration on the display unit (30), wherein in particular the display unit (30) in the form of the television screen or the computer monitor is switched into an information mode for displaying the information (40) by means of the remote control unit.

## Revendications

1. Système avec un téléphone mobile (20, 20') et une unité de communication (10) pour la réception et la visualisation d'informations (40) sur une unité d'affichage sous la forme d'un téléviseur ou d'un écran d'ordinateur,
avec un élément d'identification (11) et un élément de communication (14), dans lequel
l'élément d'identification (11) contient une séquence de données servant à l'identification de l'unité de communication (10) dans un réseau de communication (50),
l'unité de communication (10) présentant un premier adressage caractéristique (12),
une liaison de communication (60, 60') pouvant être établie entre le réseau de communication (50) et l'unité de communication (10) au moyen de l'élément de communication (14),
l'unité de communication (10) pouvant être reliée à une unité d'affichage (30) sous la forme du téléviseur ou de l'écran d'ordinateur, **caractérisé en ce que**
le premier adressage caractéristique (12) de l'unité de communication (10) correspond à un deuxième adressage caractéristique (13) du téléphone mobile (20, 20') et l'unité de communication (10) réceptionnant une information (40) envoyée au téléphone mobile (20, 20'), et
en conséquence, l'information (40) envoyée au téléphone mobile (20, 20') étant transmise en parallèle à l'unité de communication (10) tout comme également au téléphone mobile (20, 20'), et
l'information (40) pouvant être visualisée via l'unité d'affichage (30) sous la forme du téléviseur ou de l'écran d'ordinateur,
dans lequel l'unité de communication (10) présente une première interface pour une connexion de transfert de données (15), laquelle sert à un échange de données avec le téléphone mobile (20, 20'),
dans lequel, grâce à la l'échange de données, un échange d'une donnée ou de l'information entre l'unité de communication (10) et le téléphone mobile (20, 20') a lieu pour une comparaison, et des informations (40) déjà lues ou réceptionnées le cas échéant étant munies d'un indicateur correspondant.

2. Unité de communication (10) selon la revendication 1,
**caractérisée en ce que**
l'unité de communication (10) présente une deuxième interface et une mémoire de données, une caméra (70, 70') et/ou un microphone (71) pouvant être raccordés à la deuxième interface.

3. Unité de communication (10) selon la revendication 1 ou 2,
**caractérisée en ce que**
le réseau de communication (50) est un réseau de télécommunication, en particulier un réseau de radiocommunication mobile, en particulier le premier et le deuxième adressage (12, 13) étant un numéro de téléphone (MSISDN).

4. Unité de communication (10) selon l'une des revendications précédentes,
**caractérisée en ce que**
l'information (40) est un message de texte d'un service de télécommunication, en particulier un SMS (Short Message Service), un MMS (Multimedia Messaging Service), un message électronique, un EMS (Enhanced Message Service), un UM (Unified Messaging) et/ou un LBS (Location Based Services).

5. Unité de communication (10) selon l'une des revendications précédentes,
**caractérisée en ce que**
l'unité de communication (10) est intégrée dans l'unité d'affichage (30) sous la forme du téléviseur ou de l'écran d'ordinateur.

6. Procédé pour réceptionner des informations (40),
avec une unité de communication (10) et un téléphone mobile, dans lequel
l'unité de communication (10) présente un élément d'identification (11) et un élément de communication (14),
l'élément d'identification (11) contenant une séquence de données servant à l'identification de l'unité de communication (10) dans un réseau de communication (50),
l'unité de communication (10) présentant un premier adressage caractéristique (12),
une liaison de communication (60, 60') entre le réseau de communication (50) et l'unité de communication (10) étant établie au moyen de l'élément de communication (14),
l'unité de communication (10) étant reliée à une unité d'affichage (30) sous la forme d'un téléviseur ou d'un écran d'ordinateur, **caractérisé en ce que**
le premier adressage caractéristique (12) de l'unité de communication (10) correspond à un deuxième adressage caractéristique (13) d'un téléphone mobile (20, 20') et l'unité de communication (10) réceptionnant une information (40) envoyée au téléphone mobile (20, 20'), dans lequel
en conséquence, l'information (40) envoyée au téléphone mobile (20, 20') est transmise en parallèle à l'unité de communication (10) tout comme également au téléphone mobile (20, 20'),
dans lequel l'unité de communication (10) présente une première interface pour une connexion de transfert de données (15), laquelle sert à un échange de données avec le téléphone mobile (20, 20'),
dans lequel, grâce à l'échange de données, un échange d'une donnée ou de l'information entre l'unité de communication (10) et le téléphone mobile (20, 20') a lieu pour une comparaison, et des informations (40) déjà lues ou réceptionnées le cas échéant, étant munies d'un indicateur correspondant, et
l'information (40) étant visualisée via l'unité d'affichage (30) sous la forme du téléviseur ou de l'écran d'ordinateur.

7. Procédé selon la revendication 6,
**caractérisé en ce que**
l'unité de communication (10) et le téléphone mobile (20, 20') réceptionnent un message de signalisation (45, 45'), et **en ce que** le message de signalisation (45, 45') indique une information (40) déposée dans le réseau de communication (50), dans lequel, en particulier grâce à une confirmation au niveau de l'unité de communication (10) et/ou du téléphone mobile (20, 20'), l'information (40) est réceptionnée par l'unité de communication (10) et/ou le téléphone mobile (20, 20').

8. Procédé selon la revendication 6 ou 7,
**caractérisé en ce que**
par l'intermédiaire du téléphone mobile (20, 20') ou d'une unité de télécommande, un message est entré dans l'unité de communication (10) et est affiché sur l'unité d'affichage (30) sous la forme du téléviseur ou de l'écran d'ordinateur, le message étant transmis par l'intermédiaire de la liaison de communication (60, 60') au réseau de communication (50).

9. Procédé selon l'une des revendications 7 ou 8,
**caractérisé en ce que**
le réseau de communication (50) détermine une position du téléphone mobile (20, 20'), dans lequel, en particulier dans le cas où la position correspond à une zone préalablement définie, l'information (40) est envoyée exclusivement à l'unité de communication (10) par le réseau de communication (50).

10. Procédé selon l'une des revendications 7 ou 9,
**caractérisé en ce que**
l'information (40) est affichée à l'écran par l'unité de communication (10) dans une illustration courante sur l'unité d'affichage (30), dans lequel, en particulier l'unité d'affichage (30) sous la forme du téléviseur ou de l'écran d'ordinateur est mise dans un mode d'information au moyen de l'unité de télécommande pour la représentation de l'information (40).
